# EUROPÄISCHE PATENTSCHRIFT

(11) **EP 1 727 621 B1**
(45) Veröffentlichungstag und Bekanntmachung des Hinweises auf die Patenterteilung: **11.06.2008**
(21) Anmeldenummer: 05701283.3
(22) Anmeldetag: 01.02.2005
(51) Int. Cl.: B02C 18/00, G01N 33/12

(54) **FLEISCHVERARBEITUNGSMASCHINE MIT FETTANALYSEVORRICHTUNG**
MEAT PROCESSING MACHINE COMPRISING A FAT ANALYZING DEVICE
MACHINE DE TRAITEMENT DE VIANDE COMPORTANT UN DISPOSITIF D'ANALYSE DES GRAISSES

(30) Priorität: 17.03.2004 DE 102004013339; 02.06.2004 DE 102004027024
(43) Veröffentlichungstag der Anmeldung: 06.12.2006
(73) Patentinhaber: CFS Germany GmbH, 35216 Biedenkopf-Wallau (DE)
(72) Erfinder: LINN, Stefan, Josef, 65594 Runkel (DE); HOFFMANN, Hartmut, 57334 Bad Laasphe-Feudingen (DE); EVERS, Dieter, 75334 Straubenhardt (DE)
(74) Vertreter: Wolff, Felix
(86) Internationale Anmeldenummer: PCT/EP2005/000949
(87) Internationale Veröffentlichungsnummer: WO 2005/097328

(56) Entgegenhaltungen:
- DE-A1- 10 229 694
- US-A- 5 918 977

## Beschreibung

Die vorliegende Erfindung betrifft eine Fleischverarbeitungsmaschine mit der frisches und/oder gefrorenes Fleisch zerkleinert wird und die eine Fettanalysevorrichtung zur Bestimmung des Fettgehaltes, der Dichte im Fleisch und/oder des BEFFE (Bindegewebeeiweißfreies Fleischeiweiß) aufweist wie sie z.B. aus DE 102 29 694 bekannt ist.

Da Fleischprodukte heutzutage einen bestimmten Fettgehalt nicht überschreiten dürfen, spielt eine genaue Fettanalyse von Fleisch und eine exakte Einstellung von bestimmten Fettgehalten bei Fleischprodukten eine immer größere Rolle. Vorzugsweise erfolgt die Analyse des Fettgehaltes des Fleisches während der Verarbeitung in einer Fleischverarbeitungsmaschine. Es gibt deshalb eine Reihe von Vorschlägen, wie diese Messungen erfolgen sollten, die jedoch alle den Nachteil haben, dass sie sehr aufwendig und/oder teilweise ungenau sind.

Es stellt sich deshalb die Aufgabe eine Fleischzerkleinerungsmaschine zur Verfügung zu stellen, die eine Fettanalysevorrichtung aufweist, mit der der Fettgehalt von frischem oder gefrorenem Fleisch hinreichend genau bestimmbar ist.

Gelöst wird die Aufgabe mit einer Fleischzerkleinerungsmaschine gemäß Patentanspruch 1. Bevorzugte Ausführungsform der Fleischzerkleinerungsmaschine sind in den Unteransprüchen 2 bis 5 beansprucht.

Es war für den Fachmann überaus erstaunlich und nicht zu erwarten, dass es mit der erfindungsgemäßen Fleischzerkleinerungsmaschine gelingt, den Fettgehalt des zu verarbeitenden Fleischproduktes sehr genau zu bestimmen. Mit der erfindungsgemäßen Vorrichtung ist es möglich Messfehler, die sich aufgrund von Strukturproblemen in dem zu messenden Produkt ergeben, zu vermindern. Insbesondere die Vorzerkleinerung und/oder Mischung des zu analysierenden Produktes reduziert die Messfehler erheblich.

Als Fettanalysemittel kommt jedes dem Fachmann geläufige Fettanalysemittel in Frage. Vorzugsweise weist das Fettanalysemittel jedoch eine Strahlungsquelle mit vorzugsweise mehreren Energiestufen und einen Strahlungsdetektor auf. In einer ganz besonders bevorzugten Ausführungsform ist die Strahlungsquelle eine Röntgenquelle und der Strahlungsdetektor ein Röntgendetektor. Ebenfalls bevorzugt ist als Strahlungsquelle eine Infrarotquelle und als Strahlungsdetektor ein Infrarotdetektor.

Bei der Fettanalyse mittels Röntgendetektor wird die Abschwächung des Röntgenstrahls vorzugsweise in einem Energiebereich zwischen 18 und 45 keV gemessen. Vorzugsweise beträgt der Messweg, insbesondere die durchstrahlte Fleisschicht 20 bis 300 mm, besonders bevorzugt 50 bis 100 mm, ganz besonders bevorzugt 50 - 70 mm. Die Berechnung des Fettgehaltes sowie die Steuerung der Röntgenquelle erfolgt durch einen Mikroprozessor oder Speicher-programmierbare-Steuerung (SPS-Steuerung).

Ebenfalls bevorzugt erfolgt die Fettanalyse mit **N**ear **I**nfrared **R**eflection (NIR) oder mit **N**ear **I**nfrared **T**ransmission (NIT).

Erfindungsgemäß ist bezogen auf die Fließrichtung des Fleisches vor der Fettanalysevorrichtung ein Vorschneider vorgesehen. Vorzugsweise ist ein Zerkleinerungsmittel vorgesehen. Weiterhin bevorzugt ist eine Lochscheibe, die besonders bevorzugt mit einem Messer zusammenwirkt. In einer anderen bevorzugten Ausführungsform ist das Zerkleinerungsmittel ein Messer. In dem Vorschneider beziehungsweise in der Lochscheibe und/oder dem Messer wird das zu analysierende Fleisches zerkleinert und vorzugsweise vermischt. Die Zerkleinerungsmittel können auch in Kombination eingesetzt werden.

Fleisch im Sinne der Erfindung ist jedes Produkt, das Fleisch zumindest teilweise enthält.

Vorzugsweise ist die Fettanalysevorrichtung in einem Messvorschneider angeordnet, der bezogen auf die Fließrichtung des Fleisches hinter dem Vorschneider angeordnet ist. Dieser Messvorschneider weist Ausnehmungen auf, an deren Kanten das Fleisch nach der Vorzerkleinerung in dem Vorschneidervorzugsweise nicht weiter zerkleinert wird. Die Messstrecke der Fettanalysevorrichtung ist vorzugsweise in einer dieser Ausnehmungen angeordnet. Der zusätzliche Vorschneider vor dem Messvorschneider hat den Vorteil, dass der Verschleiß an dem Vorschneider statt findet und an dem Messvorschneider zumindest vermindert und somit der definierte Sitz der Fettanalysevorrichtung in dem Messvorschneider nicht verändert wird. Durch die Vorzerkleinerung des Produktes in dem Vorschneider wird die Genauigkeit der Fettanalyse erhöht.

Die Zerkleinerung und/oder Mischung des zu analysierenden Produktes vor der Messung hat insbesondere auch den Vorteil, dass zwei gegeneinander versetzte Teilstränge in die Messkammer eintreten und damit fehlerhafte Messungen durch ungünstige Fett/Mager Schichtungen vermieden werden.

Ganz besonders bevorzugt sind die Ausnehmungen des Vorschneiders, insbesondere die Ausnehmung die der Messstrecke der Fettanalysevorrichtung vorgelagert ist, beispielsweise durch einen Steg mindestens einmal geteilt. Diese Ausführungsform hat den Vorteil, dass das zu analysierende Produkt in dem Vorschneider geteilt und bei der nachfolgenden Zusammenführung in dem Messvorschneider noch einmal vermischt wird, was zu wesentlich repräsentativeren Messergebnissen führt. Des weiteren hat diese Ausführungsform den Vorteil, dass verhindert wird, dass ein Teil des Fleisches längere Zeit in der Messkammer hängen bleibt, wodurch die Messung verfälscht wird.

Vorzugsweise wirkt der Vorschneider mit einem zusätzlichen Messer zusammen, dass bezogen auf die Flussrichtung des Fleisches vor dem Vorschneider angeordnet ist. Dieses zusätzliche Messer sorgt für einen sauberen Schnitt des Fleisches, so dass sich beispielsweise kein Bindegewebe über den Steg des Vorschneiders legt. Hierdurch wird verhindert, dass Fleisch mit beliebigem Fettgehalt für längere Zeit in der Messkammer verweilt, was sich ebenfalls positiv auf die Analysequalität auswirkt.

Im Folgenden wird die Erfindung anhand der Figuren 1 bis 3 erläutert. Diese Erläuterungen sind lediglich beispielhaft und schränken den allgemeinen Erfindungsgedanken nicht ein.
**Figur 1** zeigt Teile einer Fleischzerkleinerungsmaschine.
**Figur 2** zeigt einen Messvorschneider.
**Figur 3** zeigt die Kombination aus einem Messvorschneider und dem davor gelagerten Verschleißvorschneider.

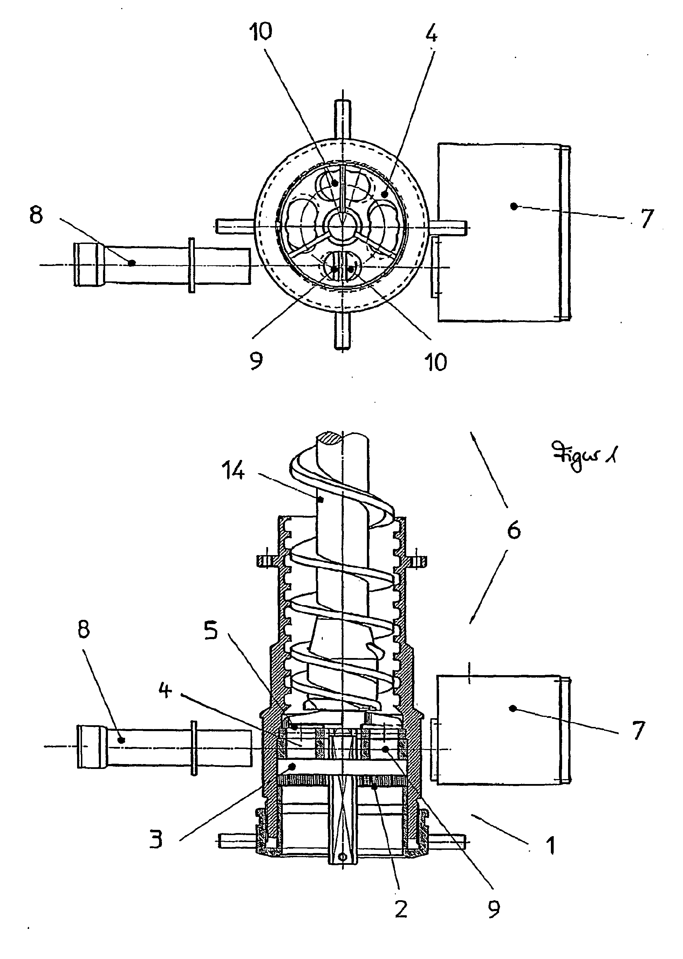

**Figur 1** zeigt eine Ausführungsform der erfindungsgemäßen Fleischzerkleinerungsmaschine in zwei Ansichten.
Wie aus der rechten Ansicht ersichtlich, wird das Fleisch mit einer Schnecke 14 von links nach rechts transportiert und in dem Schneidsatz 1 zerkleinert. Der Schneidsatz 1 besteht aus zwei Vorschneidern, dem Vorschneider 5 und dem Meßvorschneider 4, einem nachgeordneten Messer 3 und einer Lochscheibe 2, wobei das Messer 3 mit der Lockscheibe zusammenwirkt. Der Fachmann erkennt, dass vor dem Vorschneider 5, der dem Meßvorschneider 4 vorgelagert ist, ebenfalls noch ein Messer vorhanden sein kann. An dem Vorschneider 5 findet der Verschleiß, der bei der Vorzerkleinerung auftritt, statt, so dass der Verschleiß an dem Meßvorschneider 4 zumindest stark vermindert ist.
In dem Messvorschneider 4 ist eine Fettanalysevorrichtung angeordnet, die aus einer Strahlungsquelle 7 und einem Strahlungsdetektor 8 besteht. Von der Strahlungsquelle 7 wird ein Strahl, in dem vorliegenden Strahl ein Röntgenstrahl 9 abgestrahlt, der wie aus dem linken Teil der Figur 1 ersichtlich die Ausnehmung 10 in dem Messvorschneider 4 durchstrahlt und am Ende der Ausnehmung 10 von dem Strahlendetektor 8 empfangen und analysiert wird.

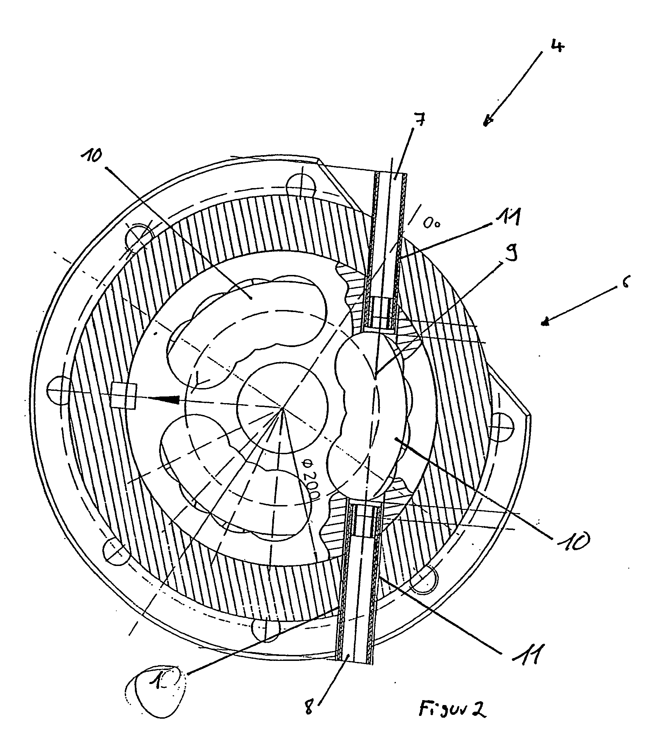

**Figur 2** zeigt eine Detaildarstellung des Messvorschneiders 4. Im Bereich einer Ausnehmung 10 sind Bohrungen 11 angeordnet, in die die Strahlungsquelle 7 bzw. der Strahlungsdetektor 8 eingeführt werden. Die Strahlungsquelle 7 sendet einen Röntgenstrahl 9 aus, der das Fleisch, das sich in der Ausnehmung 10 befindet, durchstrahlt. Aufgrund der unterschiedlichen Absorption der Strahlung 9 durch Fett- und Magerfleisch kann der Fettgehalt des sich in der Ausnehmung befindlichen Fleisches bestimmt werden.

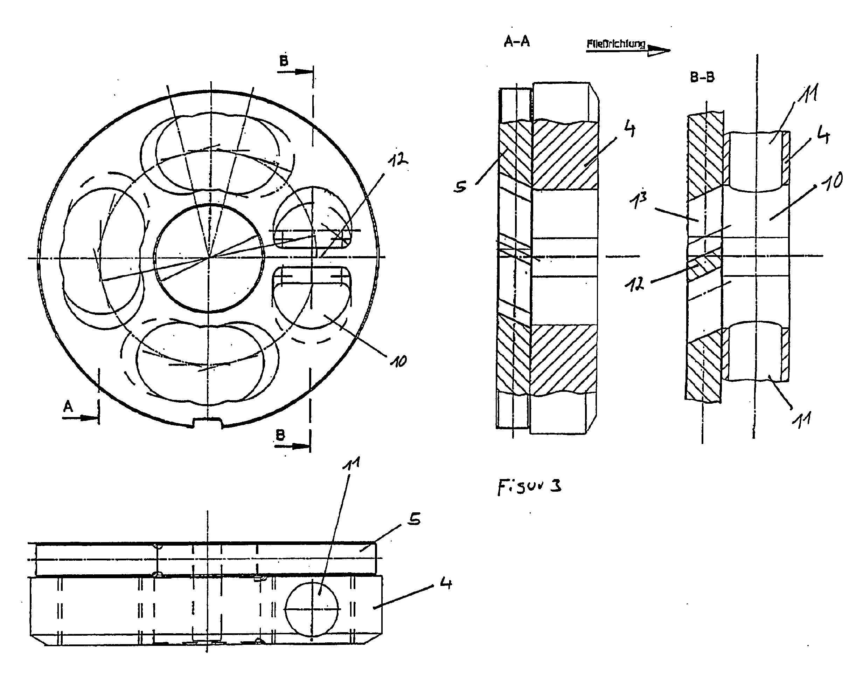

In **Figur 3** ist die Kombination aus Vorschneider 5 und Messvorschneider 4 dargestellt. Der Vorschneider 5 ist bezogen auf die Flussrichtung des Fleisches dem Messvorschneider 4 vorgelagert, wobei sich die Ausnehmungen 13 des Vorschneiders 5 mit den Ausnehmungen 10 des Messvorschneiders 4 im wesentlichen überdecken.

In einer der Ausnehmungen 13 des Vorschneiders 5, die der Messstrecke vorgelagert ist, ist ein Steg 12 vorgesehen, so dass diese Ausnehmung geteilt wird

Diese Teilung der Ausnehmung 13 hat den Vorteil, dass das Fleisch in der Ausnehmung 10 des Messschneiders 4 in der sein Fettgehalt bestimmt wird besser durchmischt ist. Dem Vorschneider 5 ist bezogen auf die Flussrichtung des Fleisches ein nicht dargestelltes Messer vorgeordnet, das die ankommenden Fleischstücke sauber zerschneidet, so dass die Fleischstücke während der Messung bereits sauber vorzerkleinert sind, was die Qualität des Messergebnisses verbessert. Des weiteren hat die Teilung der Ausnehmung den Vorteil, dass eine die Messung verfälschende ungünstige Schichtung des Fleisches in der Messkammer (Messstrecke) vermieden wird.

Der Fachmann erkennt, dass eine einfache Mischung des Fleisches vor der Messung auch ausreichend sein kann, um Fehlmessungen durch ungünstige Schichtungen des Fleisches in der Messstrecke zu vermeiden.

### Bezugszeichenliste:

- 1: Schneidsatz
- 2: Lochscheibe
- 3: Messer
- 4: Messvorschneider
- 5: Vorschneider mit einer geteilten Ausnehmung
- 6: Fettanalysemessgerät
- 7: Strahlenquelle
- 8: Strahlendetektor
- 9: Strahl
- 10: Ausnehmung im Meßvorschneider
- 11: Bohrung für Strahlenquelle und/oder Strahlendetektor
- 12: Steg
- 13: Ausnehmung im Vorschneider
- 14: Schnecke

## Patentansprüche

1. Fleischzerkleinerungsmaschine mit einem Schneidsatz (1), wobei eine Fettanalysevorrichtung (6) im Bereich des Schneidsatzes (1) angeordnet ist, wobei der Fettanalysevorrichtung (6) bezogen auf die Flussrichtung des Fleisches ein Vorschneider (5) und ein Zerkleinerungsmittel und/oder ein Mischmittel oder eine Lochscheibe, vorgeordnet ist, **dadurch gekennzeichnet, dass** zumindest eine Ausnehmung (13) des Vorschneiders (5) geteilt ist.

2. Fleischzerkleinerungsmaschine nach Anspruch 1, **dadurch gekennzeichnet, dass** die Fettanalysevorrichtung (6) in einem Meßvorschneider (4) angeordnet ist.

3. Fleischzerkleinerungsmaschine nach einem der voranstehenden Ansprüche, **dadurch gekennzeichnet, dass** der Vorschneider (5) ein Verschleißvorschneider (5) ist.

4. Fleischzerkleinerungsmaschine nach einem der voranstehenden Ansprüche, **dadurch gekennzeichnet, dass** in der geteilten Ausnehmung (13) ein Steg angeordnet ist, der das zu analysierenden Produkt in zwei Teilstränge teilt, die in die Messkammer des Messvorschneiders laufen.

5. Fleischzerkleinerungsvorrichtung nach einem der voranstehenden Ansprüche, **dadurch gekennzeichnet, dass** der Vorschneider (5) mit einem Messer zusammenwirkt.

## Claims

1. Meat chopping machine with a set of cutters (1), a fat analyzing device (6) being arranged in the region of the set of cutters (1), a rough cutter (5) and a chopping means and/or a mixing means, or a perforated disk, being arranged upstream, with respect to the flow direction of the meat, of the fat analyzing device (6), **characterized in that** at least one recess (13) of the rough cutter (5) is divided.

2. Meat chopping machine according to Claim 1, **characterized in that** the fat analyzing device (6) is arranged in a measuring rough cutter (4).

3. Meat chopping machine according to one of the preceding Claims, **characterized in that** the rough cutter (5) is a wearing rough cutter (5).

4. Meat chopping machine according to one of the preceding Claims, **characterized in that** a web is arranged in the divided recess (13), the web dividing the product to be analyzed into two partial strands which run into the measuring chamber of the measuring rough cutter.

5. Meat chopping machine according to one of the preceding Claims, **characterized in that** the rough cutter (5) interacts with a blade.

## Revendications

1. Machine pour hacher la viande comprenant un ensemble de coupe (1), dans laquelle un dispositif d'analyse des graisses (6) est disposé dans la région de l'ensemble de coupe (1), le dispositif d'analyse des graisses (6), par rapport à la direction d'avance de la viande, étant précédé d'un pré-coupeur (5) et d'un hachoir et/ou d'un mélangeur ou d'une plaque à trous, **caractérisée en ce qu'au** moins un évidement (13) du pré-coupeur (5) est divisé.

2. Machine pour hacher la viande selon la revendication 1, **caractérisée en ce que** le dispositif d'analyse des graisses (6) est disposé dans un pré-coupeur de mesure (4).

3. Machine pour hacher la viande selon l'une quelconque des revendications précédentes, **caractérisée en ce que** le pré-coupeur (5) est un pré-coupeur (5) à usure.

4. Machine pour hacher la viande selon l'une quelconque des revendications précédentes, **caractérisée en ce que** dans l'évidement divisé (13) est disposée une nervure qui divise le produit à analyser en deux tronçons partiels qui passent dans la chambre de mesure du pré-coupeur de mesure.

5. Dispositif pour hacher la viande selon l'une quelconque des revendications précédentes, **caractérisé en ce que** le pré-coupeur (5) coopère avec un couteau.
